# EUROPEAN PATENT SPECIFICATION

(11) **EP 3 323 288 B1**
(45) Date of publication and mention of the grant of the patent: **28.04.2021**
(21) Application number: 17202734.4
(22) Date of filing: 21.11.2017
(51) Int. Cl.: A01M 7/00

(54) **SPRAYING BOOM**
SPRITZGESTÄNGE
RAMPE DE PULVÉRISATION

(30) Priority: 21.11.2016 DK 201670924
(43) Date of publication of application: 23.05.2018
(73) Proprietor: Samson Agro A/S, 8800 Viborg (DK)
(72) Inventor: Freudendahl, Jørn, 6400 Sønderborg (DK); Gregersen, Morten, 7830 Vinderup (DK); Thomsen, Carsten Nørlund, 8870 Langå (DK)
(74) Representative: Patrade A/S

(56) References cited:
- EP-A1- 2 186 405
- EP-A1- 2 959 763
- DE-A1-102013 221 468

## Description

### Field of the invention

The present invention relates to a spraying boom for distributing organic liquid fertilizer or pesticides, such as slurry for example, using a tractor-drawn or self-propelled tanker and preferably in the form of a drag hose boom, said spraying boom comprising a main frame and two side wings mounted thereon, divided into several sections, which are mutually swivelling for repositioning between a transport position, in which the side wings are mounted in planes that are broadly parallel with the direction of forward motion of the slurry tanker, and a working position, in which at least some sections of the side wings are swivelled to a position broadly at right angles to the transport position, said spraying boom additionally comprising hose holders, on which application hoses are mounted, and a hydraulic system with actuators for swivelling the spraying boom sections.

### Background of the invention

The invention relates to equipment for distributing organic liquid fertilizer such as slurry for example, using a tractor-drawn or self-propelled tanker. The equipment has at least one side wing divided into several foldable sections, on which hose holders are mounted, where discharge hoses are secured. The hose outlets allow distribution of fertilizer in rows at a certain specified distance in the field. It should be noted that a side wing is also called an arm in this sector.

In order to limit atmospheric pollution and allow application of fertilizer in growing crops without corresponding contamination of the plants with harmful microorganisms, the aim is to ensure that the hose outlets of the equipment remain in close contact with the surface of the ground in the fields.

There is a known technical solution, which has provided corresponding equipment called drag hose booms. Supply of fertilizer close to the ground helps to limit emissions and the spread of disease-causing bacteria and microbes, and increase the up-take of fertilizer by the plants.

Drag hose booms preferably operate with distributors, either a main distributor or several decentralized distributors, fertilizer being supplied at the inlet from the tank using a spreading pump or an excess pressure in the tank from an air compressor.

A number of hoses are connected to each distributor, and the distributors ensure even distribution of fertilizer through the hose outlets to the field. During actual fertilizer application, the sections of the side wings have the task, by means of the hose holders, of positioning the hose outlets at a specified evenly spaced distance from one another, while they are dragged across the ground. While the tanker proceeds in a direction of forward motion in the field, the fertilizer is placed in rows in the field and becomes available to the growing crops.

A drag hose boom with these properties is known *inter alia* from the description of utility patent DE 297 15 481 U1. This describes a drag hose boom with at least two distributors and two side wings. In that case the distributors have a special cutting device, which is able to shred any straw residues in the slurry.

For agriculture it is an advantage if the tanker can place the fertilizer with a relatively large working width. This limits the travel and the consequent travel damage in the field. Travel damage is partly soil compaction from the weight of the vehicle, and partly plants that are flattened by the tractor and the tanker's running gear. To limit travel damage it is common practice in agriculture to lay out spraying tracks in the field. The spraying tracks give defined running tracks to be followed in fertilizer application and spraying of growing crops. Apart from travel damage, the spraying tracks provide easy access, to reduce the risk of over-fertilization, as overlapping application during manuring is limited. The spraying tracks are laid out with a certain fixed distance between them, so that the field is divided into plots.

Fields are often surrounded by hedgerows and other vegetation. This means that a working width setting that is only blocking for the hose outlets is not considered to be usable, as the sections of the side wings will constantly collide with the hedgerow when the tanker is to follow the spraying tracks laid out in the field.

It is a part of the whole procedure that the tanker, after it has been emptied during fertilizer application, often has to travel along farm roads and possibly public roads to a stationary tank near the farm to be filled up again.

This requires the sections of the side wings to be foldable to a suitable transport position. The main rule is that the wing sections are folded up and placed along the sides of the tanker with orientation in the direction of travel. It is a requirement that the tanker's total transport width and transport length including the equipment must not exceed the limits set by the authorities.

For tankers that are to travel by public roads, a common requirement of the authorities is that the actual transport width of the tanker is under 2.55 m. It is, however, possible in this connection for the vehicle's wheel assembly to give rise to a transport width up to 3.0 m in the case when the wheel assembly uses low-pressure tyres. The exceptional rule is introduced to reduce the aforementioned travel damage as a result of soil compaction. Finally, implements to which a tanker is attached may in certain cases be accepted with transport widths up to 3.3 m. The authorities' requirements specify a space between tank and permissible transport width and above the running gear, where a wing section of a drag hose boom can be placed during transport.

With large working widths, it should be possible for the sections and hose holders of the side wings to have a certain distance from the ground, so that irregularities in the field do not lead to collision during fertilizer application.

In this case it has been general practice to use hoses of a flexible material and ensure that each individual hose has a certain length to maintain the necessary safe distance from the surface of the ground, which once again prevents collision with the sections of the side wings.

It has also become practice for the hose holders to be able to fold the hoses up from a working position, in which the hose outlets point down to the ground, and to a transport position, in which the hose outlets are oriented upwards.

Folding of the hose holders also has the practical advantage that possible fertilizer residues in hoses, distributors and supply lines to the equipment on completion of delivery are not spilt during the transport run and pollute roads and farms.

The use of flexible hoses means, however, that during use the hoses change shape, and bend. If the hoses are placed externally along the sections of the side wings during transport, the effect of the bending will be that the transport width is gradually increased.

It is desirable to provide the possibility of placing the equipment's sections and hose holders in a transport position above the tanker's wheel assembly, thereby limiting the total transport width. That will also make it possible for the folded-up hose outlets to be placed between folded wing sections so that a gradual increase in transport width does not occur. It should be noted that individual hose holders are mounted on the individual sections, and that they have a length that corresponds to the length of the attached section.

Quite generally, drag hose booms in the working position are placed at the rear end of the tanker, usually suspended in a main frame in a three-point suspension or similar, which allows coupling of various implements with the tanker. This placement is practical in the situation where fertilizer is to be applied in a corner of a field, as the tanker can reverse into the corner and ensure complete coverage with fertilizer.

By placing the hose boom at the rear end, there is natural division of the boom into a middle section and two side wings, a right wing and a left wing, which are divided into sections. Even if in principle there is no need for a right and a left side wing, the symmetrical placement makes sense to maintain balance in the tanker and does not require any unnecessary extra counterweight.

The authorities' maximum permissible transport length for a vehicle limits the length of a tractor-driven tanker. To ensure that the tractor is able to negotiate curves with a tanker, the length of the tank in the towed vehicle may not be greater than 10 m. This means that the largest tractor-drawn and self-propelled tankers can establish a working width of about 24 m by folding two side wings along the tanker in the transport position.

However, the length of the tanker in the field is not without importance, as the quantity of crops run down by the tractor and tanker wheel assemblies increases with the length of the tanker. The effect is that with smaller field sizes and more irregular field shapes there is a desire to choose more compact tankers, with smaller tank length, for example 8 m.

This makes it desirable to divide the side wings into at least two sections, an inner and an outer section, which can be folded in the transport position. It is in principle possible to displace instead of folding, just as it is possible to fold about several axes.

To reduce the travel in the field, we now see spraying track distances from 20, 24, 28, 30 and up to 36 m. To cover the commonest working widths with folding such as 20, 24, 30, and 36 m it is again necessary to divide a side wing into several sections, most often 3. At present, it often happens that one of the sections will have to fold backwards, so that the transport position will comprise 3 sections in a layer and not the desired maximum of 2 sections, as the change is regarded as too difficult.

There is a desire to perform the repositioning from one working width to another working width automatically, without using manual repositioning, just as there is also a desire to ensure that there are no more than two sections in a layer during transport.

The actual folding of inner and outer sections is normally performed by hydraulic cylinders. The hydraulic cylinders form mechanical stops to give the sections their positions in the working and transport position, respectively.

In certain cases mechanical stops may also be involved in the sections to limit the forces arising in the working position. However, each hydraulic cylinder does not have more than two positions, as is known.

It is also known to let the whole drag hose boom turn about a horizontal axis in the forward direction of travel. This mobility will remove unnecessary movements in the vertical direction as a result of irregularities in the tanker's running track and will limit the acceleration forces to which the hose boom is subjected from the forward travel.

It is also known from EP2959763A1 to divide the middle section into two frames hinged at the top, at the same time both frames each having its own hydraulic cylinder at the bottom, connected in its turn with a common hinge. This combination makes it possible to raise both side wings simultaneously. Finally, the whole drag hose can still turn

DE 10 2013 221 468 A1 discloses a foldable spraying boom comprising two extension arms articulately fastened at a central part, where the extension arms are connected with each other, and having sections movable to each other between a folded transport position and an extended operating position.

However, none of the aforementioned solutions offers the possibility of raising and lowering the side wings independently of one another.

### Purpose of the invention

The aim of the present invention is to provide a spraying boom of the type mentioned at the outset with foldable side wings, which is divided into sections that can generate various working widths depending on the selected layout of spraying tracks in the field.

A further aim is to provide a spraying boom that can be repositioned from a transport position to a selected working position without needing to unfold the sections of the side wings completely, when space is limited by the spraying track distance from a hedgerow.

### Description of the invention

This is achieved according to the present invention with a spraying boom of the type mentioned at the outset, wherein between each section and between the sections and the main frame, sensors are provided for determining the mutual position between the sections and between the sections and the main frame, and the sensors are connected to a computer which, on the basis of the input from the sensors, generates an output for controlling valves in the hydraulic system for activating the relevant actuators, and which is characterized in that the computer is arranged to carry out mutually independent unfolding of the sections in each side wing.

According to the invention, a computer control system is used which, by means of the sensors, monitors the folding of the individual sections or hose holders. This makes it possible to prevent collision between the hose holders, the hoses and the sections during folding, and the distance from the sections to any hedgerows can be controlled.

Folding preferably takes place by swivelling the hose holders or the sections through an angle of 180 degrees.

At the moment that it is necessary to reposition from a transport position to a selected working position there is not always space to unfold the sections completely, as the distance from the spraying track to any hedgerows will limit the space. When at the same time the hose holders are to be folded down from a transport position to a working position without the hose holders or the hoses colliding with lateral hose holders or hoses, it is necessary to know where the sections are located. This is provided by the sensors.

The computer is arranged to carry out mutually independent unfolding of the sections in each side wing. This makes it possible to cover the commonest working widths, for example 20, 24, 30, and 36 m. Moreover, repositioning can take place simply, by means of the computer, which controls the sections individually.

According to a further embodiment, the invention is characterized in that the sensors comprise angle sensors, which determine the mutual angle between the sections and between the sections and the main frame.

Angle sensors are preferably used, as they provide an easy way of determining the mutual position of the sections.

According to a further embodiment, the invention is characterized in that the computer is arranged to carry out mutually independent unfolding of the two side wings.

By means of computer control, it is possible to automate all operations in folding of the sections.

According to a further embodiment, the invention is characterized in that each side wing comprises an inner section and one or more outer sections, preferably three outer sections.

The distance between the running tracks will be fixed for one farm, but can vary from farm to farm depending on the working width of the implements used.

For that reason it is of value for a machine pool, serving several farms with delivery of slurry, that the equipment can have variable working widths, and that repositioning from one working width to another working width can be carried out simply and quickly.

By dividing a side wing into several sections, it becomes possible to establish several working widths.

A side wing cannot be swivelled out fully when it is placed in the transport position, as the outer sections would then collide with a tractor that is intended to tow the tanker. Therefore the side wing swivels to a first position. Here, an outer section will be placed at right angles or at an angle greater than 90 degrees to an inner section. When the outer section is swivelled to this position, the hose holders of the inner section with the hoses will be able to be swivelled past the outer section to a working position. When the hoses are brought into their working position, the spraying boom can be swivelled to a position where the outer section starts to swivel inwards behind the inner section. In the final working situation, the side wing is placed with the outer section or outer sections that have the hoses oriented upwards, and one or more superposed inner sections that have the hoses oriented downwards in a working position.

According to a further embodiment, the invention is characterized in that each side wing comprises three sensors. One sensor will be provided between each lateral section. The number of sensors will therefore vary with the number of sections.

These are used for determining the mutual position of the sections of the side wings and the position of the side wing in relation to the main frame.

According to one aspect of the invention, an angle sensor is also provided on both side wings to determine the vertical position and allow fully automatic folding-in of the end of the side wing from a given working position to the fixed transport position along the sides of the tanker.

According to a further embodiment, the invention is characterized in that the actuators are hydraulic actuators, and in that some or all of the actuators comprise a motor, some or all of the motors being provided with a hydraulically activated brake, which can hold the position of the motor when no hydraulic pressure is supplied to the motor.

Alternatively only some of the actuators may have a motor and the others can be hydraulic piston/cylinder arrangements. Moreover, in some situations not every motor is provided with a brake. Thus, the motor for the outermost sections can function without a brake when the part is of low weight.

By means of the sensors, the computer control system can control the oil flow from the valves that activate the required actuators in the form of hydraulic cylinders. However, hydraulic cylinders may give very uneven movement when sections are to perform an almost 180-degree turn, and this may give rise to exceptional loads in the hinges and sections. This uneven movement can be eliminated if hydraulic motors are used instead of hydraulic cylinders.

Hydraulic motors do not, however, have an actual mechanical stop, so that the use of hydraulic motors will require the aforementioned angle sensors to be used not only for controlling the unfolding from the transport to the working position, but also for holding the working position.

However, in this connection it is recommended for the hydraulic motor to be provided with a mechanical brake, which if the travel is stopped midway or the tractor is uncoupled, so that the sections cannot move uncontrollably as a result of leakage in the motors.

Hydraulic motors do not, however, have an actual mechanical stop, so that the use of hydraulic motors will require the aforementioned angle sensors to be used not only for controlling the folding between the transport position and the working position, but also for holding the working position. However, in this connection it is recommended for the hydraulic motor to be provided with a mechanical brake, which if the travel is stopped midway or the tractor is uncoupled, prevents the sections moving uncontrollably as a result of leakage in the motors.

The use of hydraulic motors has the further advantage that they take up less space. The saving of space will be useful if the number of distributors used in the hose booms is increased. It is generally known that accuracy in fertilizer application at start-up increases with the number of distributors used.

According to a further embodiment, the invention is characterized in that each side wing is mounted on the main frame by means of a bottom hinge that comprises a ball joint, and a top hinge that comprises a guide slot that allows the side wing to swivel in a broadly vertical plane.

A ball joint is used as bottom hinge for both side wings and a guide slot with the associated pin and hydraulic cylinder to hold and move both side wings upwards and downwards independently of one another. This gives complete freedom for adapting to slopes, regardless of whether one is at the bottom or top of the slope.

Furthermore, it is possible to provide suspension of the two side wings by coupling separate accumulators to the lifting cylinders of each side wing. This not only provides damping of irregularities that give rise to turning movements of the tanker, but also of irregularities that require raising of the tanker. In this way the total acceleration forces in the side wing can be reduced.

According to a further embodiment, the invention is characterized in that the sensors include a height sensor mounted on each side wing and connected to the computer, which based on the input from the height sensor generates an output for controlling valves in the hydraulic system for activating an actuator, attached to the guide slot for setting the position of the side wing in relation to the surface of the ground.

With the invention it is thus also possible to automate the height setting of the side wings by connecting a height adjustment sensor for both side wings.

As a result, the hose outlets of the equipment remain in close contact with the surface of the ground in the fields, regardless of any height variations.

According to a further embodiment, the invention is characterized in that the sensors include a height sensor that is mounted on the main frame and is connected to the computer, which based on the input from the height sensor generates an output for controlling valves in the hydraulic system for activating an actuator, attached to the main frame for setting its position in relation to the surface of the ground.

As a result, the hose outlets of the equipment remain in close contact with the surface of the ground in the fields, regardless of any height variations.

According to a further embodiment, the invention is characterized in that the sections or the hose holders are arranged to swivel through about 180 degrees from a working position in which the outlets of the application hoses are open and oriented downwards, and a position directed upwards, in which the outlets are closed.

Folding of the hoses to the transport position makes it possible for the sections and hose holders of the side wings to be placed above the tanker's wheel assembly and thus make use of the free space along the tanker to reduce the total transport width of the equipment.

### Description of the drawings

- Fig. 1: shows a diagram of the spraying boom according to the invention in a working position with two side wings in the fully unfolded state, with the spraying boom mounted on a tanker that is intended to be towed by a tractor,
- Fig. 2: shows an enlarged diagram of the spraying boom shown in Fig. 1, to illustrate sections that form one of the side wings,
- Fig. 3: shows a diagram of the spraying boom shown in Fig. 1 seen from behind in a working position with hoses dragging along the surface of the ground,
- Fig. 4: shows a side diagram of the spraying boom shown in Fig. 1 in a transport position, in which the sections of the side wing are folded together in a transport position along the tanker's side in a plane parallel to the tanker's direction of forward motion,
- Fig. 5: shows a diagram corresponding to Fig. 4 of the tanker seen from above and with a detail that shows the displaced position of the hose holder,
- Fig. 6: shows a diagram of the spraying booms according to the invention in a working position with one side wing in the fully unfolded state and the other side wing in a transport position along the tanker's side,
- Fig. 7: shows a diagram seen from above to illustrate various working positions for a side wing in the spraying booms,
- Fig. 8: shows a diagram seen from above of various positions with a side wing unfolded in a spraying boom at a limited distance from a hedgerow,
- Fig. 9: shows a diagram seen from behind of various positions for a side wing in a spraying boom with swivelling of the side wing in a vertical plane, and
- Fig. 10: shows an overview of the folding of the sections of the side wings controlled by a computer.

### Detailed description of the invention

In general, a spraying boom 1 is shown in the form of a drag hose boom. The spraying boom comprises a main frame 2 and two side wings 3 mounted thereon. Each of the side wings 3 comprises an inner section 4 and a first, second and third outer section 5-7. A middle section 35 of the spraying boom is mounted on the main frame 2.

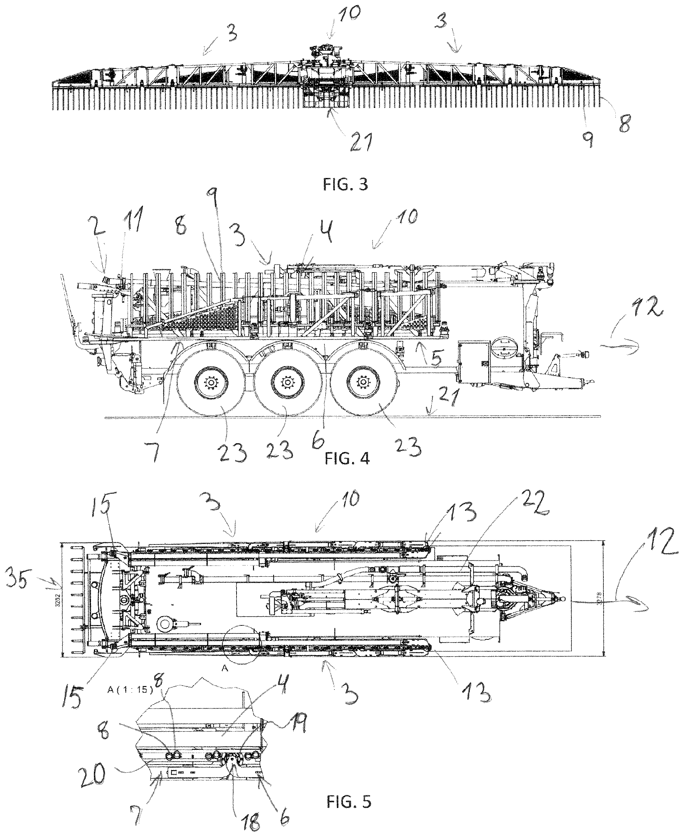

Each of the sections is provided with application hoses 8, each of which has an outlet 9 in a downward-pointing part of the hose, which is intended to be placed in close contact with the surface of the ground 21 (see Fig. 3) during forward travel with delivery of fertilizer. The main frame 2 of the spraying boom 1 is mounted on a tanker 10 via a height-adjustable bracket 11 at the rear end of the tanker as viewed in the tanker's direction of forward motion 12.

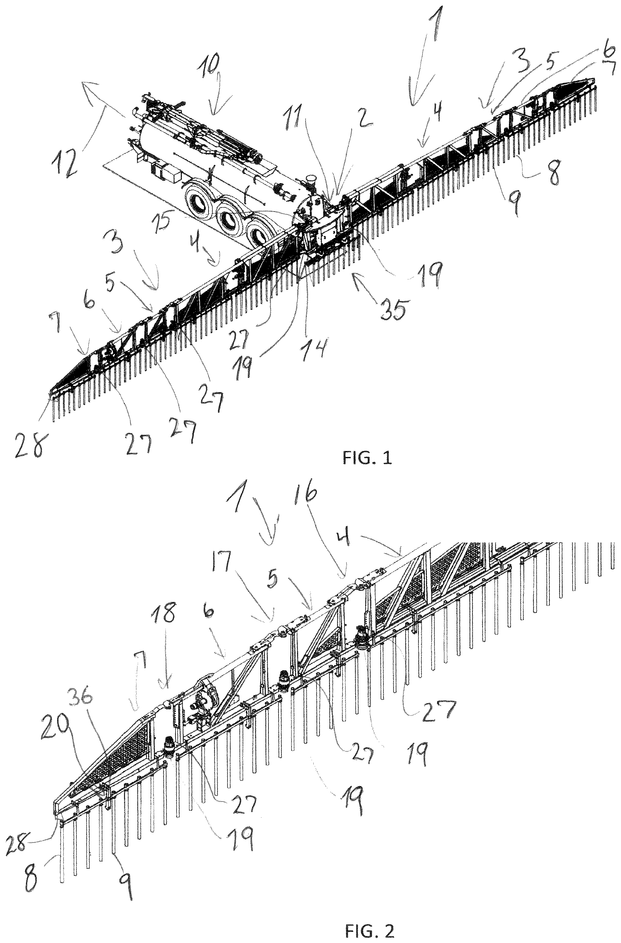

Fig. 1 shows the spraying boom in a working position, in which all the sections of the side wing are swivelled to a boom position that is broadly at right angles to the direction of transport 12. The side wings can be swivelled to a transport position, which is shown in Figs. 4 and 5, where the side wings are arranged in planes 13 that are parallel to the forward direction of travel 12.

Each of the side wings 3 is connected to the main frame 2 via a bottom hinge 14, which comprises a ball joint and a top hinge 15 that comprises a guide slot. It is thus possible for each of the side wings 3 to swivel in a broadly vertical plane, regardless of whether they are in the working position.

Fig. 2 shows a partial, enlarged diagram of the spraying boom 1 shown in Fig. 1. A hinge is provided between each of the sections 4, 5, 6 and 7. Hydraulic actuators in the form of a motor 19, which is provided with a hydraulically activated brake, are provided between each of the sections 4, 5, 6 and 7. It is thus possible to hold the position of the motor when there is no supply of hydraulic pressure to the motor 19. The motors are supplied with hydraulic oil from the tractor's hydraulic system (not shown). The hydraulic system is provided with valves (not shown), which allow individual activation of each of the motors 19 for individual swivelling of the sections of the spraying boom.

Each of the side wings 3 is provided similarly with a hydraulic motor 19 for swivelling the side wings 3 in relation to the main frame 2.

Fig. 2 shows that the hoses 8 are mounted in a hose holder 20. The hose holder 20 is mounted via hinge 36 for swivelling between the downward-pointing orientation of outlets 9 shown in the figure to the upward-pointing orientation with the outlets oriented upwards shown in Figs. 4 and 5.

It should be noted that the hose holders on each individual section can be swivelled individually between 180° from the working position, in which the outlet 9 is oriented downwards and an upward-pointing position in which it is closed for discharge from the hoses 8.

Fig. 3 illustrates a situation where all spraying boom sections are fully unfolded and placed with the outlet 9 of the hoses 8 in the immediate vicinity of the surface of the ground 21.

Fig. 4 and 5 illustrate, as mentioned above, the side wings 3 in a transport position in such a way that the inner section 4 is folded forward, while the three outer sections 5, 6 and 7 are folded to the rear in a position superposed on the inner section 4.

The main frame 2 is raised by means of the height-adjustable bracket 11, so that each of the side wings 3 is placed in a position close to the tank 22 of the tanker in a position above the tanker's wheel 23. There is thus a very small transport width. Furthermore, it can be seen from an enlarged detail of Fig. 5 that the hose holders 20 are placed so that the hoses 8 from the superposed sections 4, and 5, 6 and 7 respectively are staggered relative to one another. Thus, the hoses 8 will be placed side by side, which helps to reduce the transport width. Furthermore, it can be seen that the hoses are placed in the spaces between the superposed sections 4, and 5, 6 and 7 respectively. As a result, the hoses will have a fixed upward-pointing orientation and will not have a tendency to unfold, which would increase the transport width.

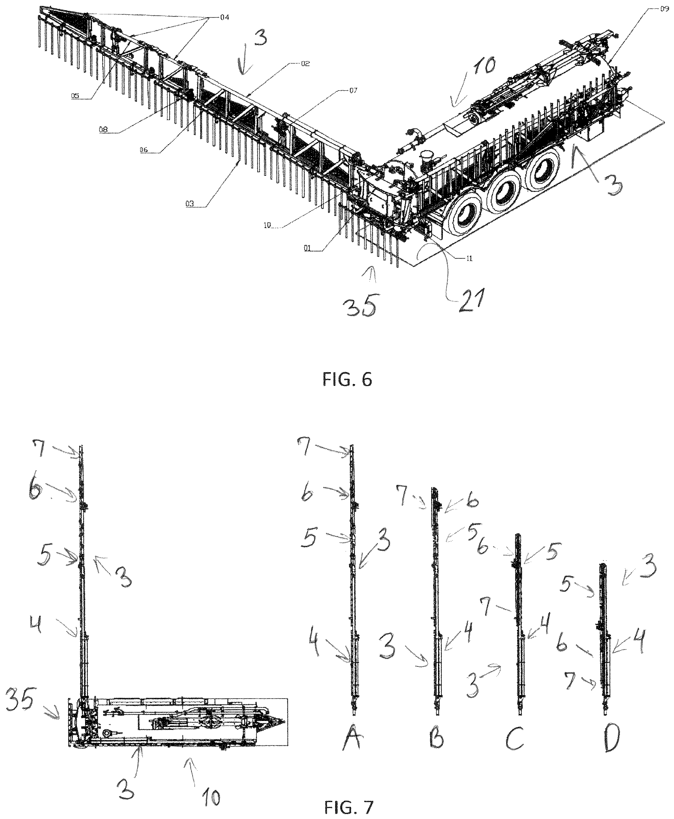

Fig. 6 illustrates a situation where one wing of the spraying boom is fully unfolded to a working position, while the other side wing 3 of the spraying boom is placed in a transport position. In such a situation it is possible to discharge a liquid fertilizer just on one side of the tanker and behind the tanker via the middle section 35.

Fig. 7 illustrates the situation shown in Fig. 6 seen from above in the diagram farthest to the left. Fig. 7 illustrates the situation of a side wing 3 in the working position with all sections fully extended.

Situation B illustrates the side wing 3 in a working position with section 7 superposed on the other sections.

Situation C illustrates a working position for the side wing 3, where sections 6 and 7 are superposed on sections 4 and 5.

Situation D illustrates a working situation of the side wing 3, where the three outer sections 5, 6, 7 are superposed on the inner section 4.

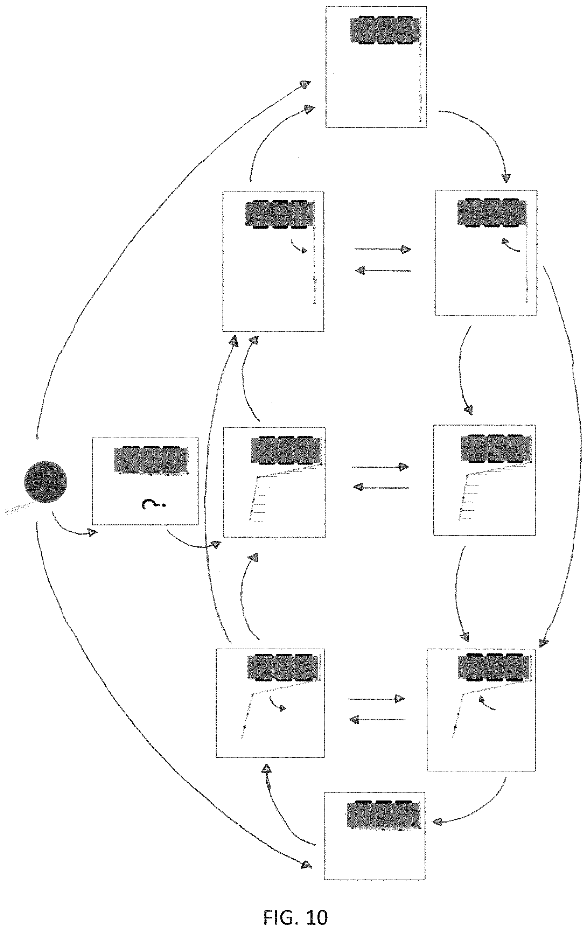

As is clear from the foregoing, it is possible to carry out individual positioning of the sections, so as to adjust the total working width of the spraying boom. This takes place without manual intervention. This is effected using a computer (see Fig. 10), which is operated by the tractor driver, and controls the actuators for the individual positioning of the sections of the spraying boom.

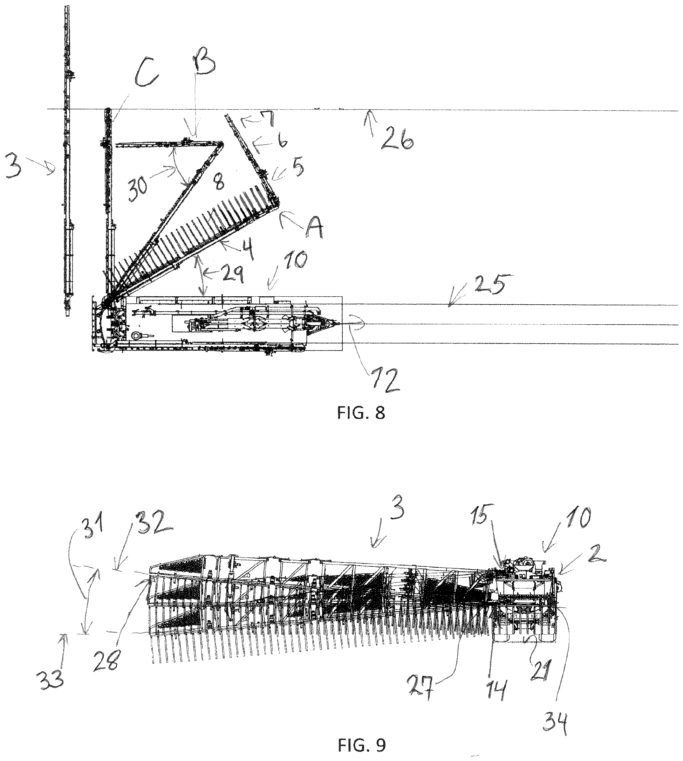

Fig. 8 illustrates the tanker 10, the direction of forward motion 12 of which is along a running track 25. A boundary hedge 26 is illustrated.

Only the left side wing 3 is illustrated in various positions during swivelling-out.

A side wing cannot be swivelled out fully when it is placed in the transport position, as the outer sections 5, 6, 7 would then collide with a tractor (not shown), which is intended to tow the tanker 10. Therefore the side wing swivels to position A. Here the outer sections 5, 6, 7 will be placed at right angles to the inner section 4. When the outer sections are swivelled to this position, the hose holders with the hoses 8 will be able to be swivelled past the outer section to a working position, as shown in Figs. 1 and 2. When the hoses are brought into their working position, the boom can be swivelled to position B, where the outer sections start to swivel inwards behind the inner section 4. Situation C shows the final working situation, where the side wing is placed with sections 5, 6, 7 superposed on section 4, which has the hoses 8 oriented downwards.

In a similar manner, it will be possible to swivel-out sections 4 and 6 together with section 7. This will merely ensure that the mutual position of the sections is placed in such a way that the hose holders can swivel the hoses freely, between the transport position and the working position.

The mutual positioning of the sections is ensured in that sensors are provided, which are indicated at 27 in the figures. The sensors are provided between each of the sections and between the sections and the main frame. Sensors 27 are angle sensors, which determine the mutual angle between each of the sections and the main frame, and are connected to the computer 24. Thus, the computer 24 can control valves for activating the hydraulic motors 19 in such a way that correct swivelling in and out of the individual sections is carried out.

Swivelling in and out can take place by means of predefined programs in the computer 24 or by optional setting of the individual sections undertaken by the operators. The placement of the sensors 27 is illustrated in Figs. 1 and 2.

Fig. 8 shows, at 29, an angle θ, which is the angle between a plane parallel to the tanker's direction of forward motion and a given angle for the position of the innermost section relative to this plane. Furthermore, it shows, at 30, an angle ϕ, which is the angle between the inner section 4 and the outer sections 5, 6, 7. These angles are shown in Fig. 10. This indicates the various commands for swivelling in and out and illustrates various working and transport positions and various intermediate positions.

Fig. 9 illustrates the angle sensor 27 that is placed between the main frame 2 and the side wing 3 for determining an angle α, which is indicated at 31. The angle α is the angle of the side wing 3 in a position 32 relative to a horizontal plane 33. This angle can be adjusted when a height sensor is used.

Furthermore, Figs. 1, 2 and 9 illustrate a height sensor 28, which is placed at the outer end of each side wing 3. The height sensor 28 is in addition connected to the computer 24 to ensure an angle position such that the position of the side wing in relation to the surface of the ground 21 is ensured when the terrain is uneven.

Fig. 9 further indicates a height sensor 34, which is mounted on the main frame 2. The sensor 34 is used for determining the position of the main frame in relation to the surface of the ground 21. The position for the spraying boom 1 in relation to the surface of the ground is also determined hereby.

Fig. 10 illustrates, as mentioned above, the computer 24. This figure does not show the leads connecting the computer to sensors, or leads connecting the computer to valves for controlling the various actuators.

The arrows between the various figures illustrate how the spraying boom can be moved between various working positions from control signals that are generated by the computer as a result of the input from the sensor. The computer will control folding in and out in accordance with prefixed algorithms, which ensures that the various sections and/or hoses of the spraying boom do not collide with one another during folding in and out and at the same time ensures that the spraying boom does not collide with the tanker or the tractor towing the tanker.

Folding in and out can take place individually for each side wing, and can also take place individually for each of the sections of the spraying boom.

## Claims

1. Spraying boom (1) for distributing organic liquid fertilizer or pesticides, such as slurry for example, using a tractor-drawn or self-propelled tanker and preferably in the form of a drag hose boom, said spraying boom comprising a main frame (2) and two side wings (3) mounted thereon, which are divided into several sections (4,5,6,7) , which are mutually swivelling for repositioning between a transport position, in which the side wings (3) are arranged in planes that are broadly parallel to the tanker's direction of forward motion (12), and a working position in which at least some sections of the side wings (3) are swivelled to a position broadly at right angles to the transport position, said spraying boom (1) additionally comprising hose holders (20) , on which the application hoses (8) are mounted together with a hydraulic system with actuators (19) for swivelling the spraying boom sections (4,5,6,7), wherein between each section (4,5,6,7) and between the sections (4) and the main frame (2), sensors (27) are provided for determining the mutual position between the sections and between the sections and the main frame, and in that the sensors (27) are connected to a computer (24) which, on the basis of the input from the sensors (27), generates an output for controlling valves in the hydraulic system for activating the relevant actuators (19), and which is **characterized in that** the computer (24) is arranged to carry out mutually independent unfolding of the sections (4,5,6,7) in each side wing (3).

2. Spraying boom (1) according to claim 1, **characterized in that** the sensors (27) comprise angle sensors, which determine the mutual angle between the sections (4,5,6,7) and between the sections (4) and the main frame (2).

3. Spraying boom (1) according to claim 1 or 2, **characterized in that** the computer (24) is arranged to carry out mutually independent unfolding of the two side wings (3)

4. Spraying boom (1) according to any one of the preceding claims, **characterized in that** each side wing (3) comprises an inner section (4) and one or more outer sections (5,6,7), preferably three outer sections.

5. Spraying boom (1) according to any one of the preceding claims, **characterized in that** each side wing (3) comprises three sensors (27).

6. Spraying boom (1) according to any one of the preceding claims, **characterized in that** the actuators are hydraulic actuators, and **in that** some or all of the actuators comprise a motor (19), some or all of the motors being provided with a hydraulically activated brake, which can hold the position of the motor when no hydraulic pressure is supplied to the motor.

7. Spraying boom (1) according to any one of the preceding claims, **characterized in that** each side wing (3) is mounted on the main frame (2) via a bottom hinge (14) that comprises a ball joint, and a top hinge (15) that comprises a guide slot that allows the side wing to swivel in a broadly vertical plane.

8. Spraying boom (1) according to claim 7, **characterized in that** the sensors (27) comprise a height sensor (28) mounted on each side wing (3) that is connected to the computer (24), which based on the input from the height sensor generates an output for controlling valves in the hydraulic system for activating an actuator, with guide slots for setting the position of the side wing in relation to the surface of the ground (21).

9. Spraying boom (1) according to any one of the preceding claims, **characterized in that** the sensors (27) comprise a height sensor (34) that is mounted on the main frame (2) and is connected to the computer (24), which based on the input from the height sensor generates an output for controlling valves in the hydraulic system for activating an actuator, to which the main frame is attached for setting its position in relation to the surface of the ground (21).

10. Spraying boom (1) according to any one of the preceding claims, **characterized in that** the sections (4,5,6,7) or the hose holders (20) are arranged to swivel through about 180 degrees from a working position where the outlets (9) of the application hoses (8) are open and oriented downwards and a position directed upwards, where the outlets are closed.

## Patentansprüche

1. Spritzgestänge (1) zum Verteilen eines organischen Flüssigdüngers oder von Pflanzenschutzmitteln, wie zum Beispiel etwa Gülle, unter Verwendung eines traktorgezogenen oder selbstfahrenden Behälterwagens und vorzugsweise in Form eines Schleppschlauchgestänges, wobei das Spritzgestänge einen Hauptrahmen (2) und zwei Seitenflügel (3) umfasst, die darauf montiert sind und die in verschiedene Abschnitte (4, 5, 6, 7) unterteilt sind, die gegeneinander schwenken, um sich zwischen einer Transportposition, in der die Seitenflügel (3) in Ebenen angeordnet sind, die im Allgemeinen parallel zur Vorwärtsbewegungsrichtung (12) des Behälterwagens sind, und einer Arbeitsposition, in der mindestens einige Abschnitte der Seitenflügel (3) auf eine Position im Allgemeinen im rechten Winkel zur Transportposition geschwenkt sind, neu zu positionieren, wobei das Spritzgestänge (1) zusätzlich Schlauchhalter (20) umfasst, an denen die Anwendungsschläuche (8) zusammen mit einem Hydrauliksystem mit Aktuatoren (19) zum Schwenken der Spritzgestängeabschnitte (4, 5, 6, 7) montiert sind, wobei zwischen jedem Abschnitt (4, 5, 6, 7) und zwischen den Abschnitten (4) und dem Hauptrahmen (2) Sensoren (27) bereitgestellt sind, um die gegenseitige Position zwischen den Abschnitten und zwischen den Abschnitten und dem Hauptrahmen zu bestimmen, und wobei die Sensoren (27) mit einem Computer (24) verbunden sind, der basierend auf der Eingabe von den Sensoren (27) eine Ausgabe zum Steuern von Ventilen in dem Hydrauliksystem zum Aktivieren der entsprechenden Aktuatoren (19) erzeugt, und der **dadurch gekennzeichnet ist, dass** der Computer (24) so angeordnet ist, dass er das gegenseitige unabhängige Aufklappen der Abschnitte (4, 5, 6, 7) in jedem Seitenflügel (3) durchführt.

2. Spritzgestänge (1) nach Anspruch 1, **dadurch gekennzeichnet, dass** die Sensoren (27) Winkelsensoren umfassen, die den gegenseitigen Winkel zwischen den Abschnitten (4, 5, 6, 7) und zwischen den Abschnitten (4) und dem Hauptrahmen (2) bestimmen.

3. Spritzgestänge (1) nach Anspruch 1 oder 2, **dadurch gekennzeichnet, dass** der Computer (24) so ausgelegt ist, dass er das gegenseitige unabhängige Aufklappen der zwei Seitenflügel (3) durchführt.

4. Spritzgestänge (1) nach einem der vorstehenden Ansprüche, **dadurch gekennzeichnet, dass** jeder Seitenflügel (3) einen inneren Abschnitt (4) und einen oder mehrere äußere Abschnitte (5, 6, 7), bevorzugt drei äußere Abschnitte, umfasst.

5. Spritzgestänge (1) nach einem der vorstehenden Ansprüche, **dadurch gekennzeichnet, dass** jeder Seitenflügel (3) drei Sensoren (27) umfasst.

6. Spritzgestänge (1) nach einem der vorstehenden Ansprüche, **dadurch gekennzeichnet, dass** die Aktuatoren hydraulische Aktuatoren sind, und dass einige oder alle Aktuatoren einen Motor (19) umfassen,
wobei einige oder alle Motoren mit einer hydraulisch betätigten Bremse versehen sind, die die Position des Motors halten kann, wenn kein hydraulischer Druck zum Motor geliefert wird.

7. Spritzgestänge (1) nach einem der vorstehenden Ansprüche, **dadurch gekennzeichnet, dass** jeder Seitenflügel (3) an dem Hautrahmen (2) über ein unteres Scharnier (14), das ein Kugelgelenk umfasst, und ein oberes Scharnier (15) montiert ist, das einen Führungsschlitz umfasst, der es ermöglicht, dass der Seitenflügel in einer im Allgemeinen vertikale Ebene schwenkt.

8. Spritzgestänge (1) nach Anspruch 7, **dadurch gekennzeichnet, dass** die Sensoren (27) einen Höhensensor (28) umfassen, der an jedem Seitenflügel (3) montiert ist und der mit dem Computer (24) verbunden ist, der basierend auf der Eingabe von dem Höhensensor eine Ausgabe zum Steuern von Ventilen in dem Hydrauliksystem zum Aktivieren eines Aktuators erzeugt, wobei die Führungsschlitze dazu dienen, die Position des Seitenflügels in Bezug auf die Oberfläche des Bodens (21) einzustellen.

9. Spritzgestänge (1) nach einem der vorstehenden Ansprüche, **dadurch gekennzeichnet, dass** die Sensoren (27) einen Höhensensor (34) umfassen, der an dem Hauptrahmen (2) montiert ist und der mit dem Computer (24) verbunden ist, der basierend auf der Eingabe von dem Höhensensor eine Ausgabe zum Steuern von Ventilen in dem Hydrauliksystem zum Aktivieren eines Aktuators erzeugt, an den der Hauptrahmen angebracht ist, um seine Position in Bezug auf die Oberfläche des Bodens (21) einzustellen.

10. Spritzgestänge (1) nach einem der vorstehenden Ansprüche, **dadurch gekennzeichnet, dass** die Abschnitte (4, 5, 6, 7) oder die Schlauchhalter (20) so angeordnet sind, dass sie um etwa 180 Grad von einer Arbeitsposition, in der die Auslässe (9) der Arbeitsschläuche (8) offen sind und nach unten ausgerichtet sind, und einer Position, die nach oben ausgerichtet ist, in der die Auslässe geschlossen sind, schwenken.

## Revendications

1. Rampe de pulvérisation (1) pour distribuer un engrais ou des pesticides organique(s) liquide(s), tels que du lisier par exemple, à l'aide d'une citerne tirée par un tracteur ou d'un automoteur-citerne et de préférence sous la forme d'une rampe à tuyaux traînés, ladite rampe de pulvérisation comprenant une ossature principale (2) et deux ailes latérales (3) montées sur celle-ci, qui sont divisées en plusieurs sections (4, 5, 6, 7), qui sont mutuellement pivotantes pour se repositionner entre une position de transport, dans laquelle les ailes latérales (3) sont agencées dans des plans qui sont essentiellement parallèles à la direction de déplacement vers l'avant (12) de la citerne, et une position de travail dans laquelle au moins certaines sections des ailes latérales (3) sont pivotées jusqu'à une position essentiellement à angles droits par rapport à la position de transport, ladite rampe de pulvérisation (1) comprenant en outre des porte-tuyaux (20), sur lesquels les tuyaux d'application (8) sont montés conjointement avec un système hydraulique ayant des actionneurs (19) pour faire pivoter les sections de rampe de pulvérisation (4, 5, 6, 7), dans laquelle entre chaque section (4, 5, 6, 7) et entre les sections (4) et l'ossature principale (2), des capteurs (27) sont ménagés pour déterminer la position mutuelle entre les sections et entre les sections et l'ossature principale, et en ce que les capteurs (27) sont connectés à un ordinateur (24) qui,
sur la base de l'entrée provenant des capteurs (27), génère une sortie pour commander des vannes dans le système hydraulique pour activer les actionneurs concernés (19), et qui est **caractérisée en ce que** l'ordinateur (24) est conçu pour effectuer un déploiement mutuellement indépendant des sections (4, 5, 6, 7) dans chaque aile latérale (3).

2. Rampe de pulvérisation (1) selon la revendication 1, **caractérisée en ce que** les capteurs (27) comprennent des capteurs d'angle, qui déterminent l'angle mutuel entre les sections (4, 5, 6, 7) et entre les sections (4) et l'ossature principale (2).

3. Rampe de pulvérisation (1) selon la revendication 1 ou 2, **caractérisée en ce que** l'ordinateur (24) est conçu pour effectuer un déploiement mutuellement indépendant des deux ailes latérales (3).

4. Rampe de pulvérisation (1) selon l'une quelconque des revendications précédentes, **caractérisée en ce que** chaque aile latérale (3) comprend une section interne (4) et une ou plusieurs sections externes (5, 6, 7), de préférence trois sections externes.

5. Rampe de pulvérisation (1) selon l'une quelconque des revendications précédentes, **caractérisée en ce que** chaque aile latérale (3) comprend trois capteurs (27).

6. Rampe de pulvérisation (1) selon l'une quelconque des revendications précédentes, **caractérisée en ce que** les actionneurs sont des actionneurs hydrauliques, et **en ce que** certains ou tous les actionneurs comprennent un moteur (19), certains ou tous les moteurs étant munis d'un frein à activation hydraulique,
qui peut maintenir la position du moteur lorsqu'aucune pression hydraulique n'alimente le moteur.

7. Rampe de pulvérisation (1) selon l'une quelconque des revendications précédentes, **caractérisée en ce que** chaque aile latérale (3) est montée sur l'ossature principale (2) via une charnière inférieure (14) qui comprend une articulation à rotule, et une charnière supérieure (15) qui comprend une fente de guidage qui permet à l'aile latérale de pivoter dans un plan essentiellement vertical.

8. Rampe de pulvérisation (1) selon la revendication 7, **caractérisée en ce que** les capteurs (27) comprennent un capteur de hauteur (28) monté sur chaque aile latérale (3) qui est connecté à l'ordinateur (24), qui sur la base de l'entrée provenant du capteur de hauteur, génère une sortie pour commander des vannes dans le système hydraulique pour activer un actionneur, avec des fentes de guidage pour régler la position de l'aile latérale par rapport à la surface du sol (21).

9. Rampe de pulvérisation (1) selon l'une quelconque des revendications précédentes, **caractérisée en ce que** les capteurs (27) comprennent un capteur de hauteur (34) qui est monté sur l'ossature principale (2) et est connecté à l'ordinateur (24), qui sur la base de l'entrée provenant du capteur de hauteur, génère une sortie pour commander des vannes dans le système hydraulique pour activer un actionneur, auquel l'ossature principale est attachée pour régler sa position par rapport à la surface du sol (21).

10. Rampe de pulvérisation (1) selon l'une quelconque des revendications précédentes, **caractérisée en ce que** les sections (4, 5, 6, 7) ou les porte-tuyaux (20) sont agencé (e) s pour pivoter sur environ 180 degrés à partir d'une position de travail où les sorties (9) des tuyaux d'application (8) sont ouvertes et orientées vers le bas et une position dirigée vers le haut, où les sorties sont fermées.
